# EUROPEAN PATENT APPLICATION

(11) **EP 2 037 418 A1**
(43) Date of publication of application: **18.03.2009**
(21) Application number: 07116598.9
(22) Date of filing: 17.09.2007
(51) Int. Cl.: G07B 15/00

(54) **Method and system for electronic ticketing**

(71) Applicant: Nederlandse Organisatie voor toegepast-natuurwetenschappelijk Onderzoek TNO, 2628 VK Delft (NL)
(72) Inventor: van der Waaij, Bram Dirk, 9728 WR Groningen (NL); Langius, Erik Alle Fokko, 9714 BA Groningen (NL)
(74) Representative: Hatzmann, Martin

(57) **Abstract**

Method and system for ticketing using a mobile telephone handset (2), comprising means for a user (1) to request an admission right for any location and inputting the telephone number of his/her handset. An admission server (4) is arranged for registering the user's admission right, including the user's telephone number. The admission server, in order to enable the user to prove his/her admission right before an admission official (6) and having an outgoing telephone number which is known by the admission official, is arranged to call the user's handset using the user's registered telephone number, thus achieving that the telephone number of the admission server is displayed at the user's handset (2). The admission server may be arranged either to call back any registered user who calls the admission server, or to call any registered user within a predetermined time window. The admission server may be arranged to suspend the call to the relevant registered user before the user responds.

## Description

The invention refers to a method for ticketing using a mobile telephone handset, sometimes referred to as e-ticketing or mobile ticketing. Mobile ticketing is the process whereby customers can order, pay for, obtain and validate tickets from any location and at any time using mobile phones or other mobile handsets. Mobile tickets reduce the production and distribution costs connected with traditional paper-based ticketing channels and increase customer convenience by providing new and simple ways to purchase tickets.
Delivery of tickets to mobile phones can be done in a variety of ways:
- Text messaging (SMS) - visual inspection or OCR
- Text messaging with WAP Push - visual inspection or OCR
- Picture messaging (SMS, WAP Push and MMS)- usually uses a barcode
- Device RFID (proposed under the Near Field Communication (NFC) specification).
   Very few phones have RFID/NFC tags and so this method of delivery is largely unsupported. Picture messaging is supported by almost all phones and is generally the delivery method of choice. It usually requires the sender to know the phone model in advance so that the picture is rendered at the correct resolution, although this can be overcome. Text-only messaging is supported by all mobile phones and is the simplest but least secure method of delivery.
   Most forms of mobile tickets require some form of device to read the ticket from the user's device. This is the only way to validate tickets and ensure that fraud is identified. Any form of visually-validated ticket can be easily generated manually.

Picture-based messages require a laser scanner (for 1-dimensional/linear barcodes) or Charge-coupled device (CCD) imager (for 2-dimensional barcodes) to photograph the message and decode it into a ticket ID. Text-based codes use OCR software. Near Field Communication devices scan using an RFID reader. Most forms of mobile ticket systems contact a server that is able to verify the ticket and record that it has been used.

The present invention aims to provide a simple, however, secure method for mobile ticketing.

According to the present invention a method is proposed in which next steps are preferred:
- a user requests an admission right for e.g. any location and inputs the telephone number of his/her handset;
- the user's admission right is registered in an admission server, including the user's telephone number;
- in order to enable the user to prove his/her admission right before e.g. an admission official, the admission server, having an outgoing telephone number which is known by the admission official, calls the user's handset using the user's registered telephone number;
- the user shows the display of the handset, displaying the telephone number of the admission server, to the official;
- the official checks the telephone number with the outgoing telephone number of the admission server.

Thus in short, the user e.g. buys- via conventional or more modem means - a ticket (admission right) for an event, including that his/her mobile network number is entered into the admission server. When the user wants to visit the event, (s)he has to prove, before an admission official, that (s)he bought a ticket. Two options may be preferred:
- the user calls the admission server, after which the admission server calls back the user, e.g. (but not necessarily) suspending that call before the user responds, resulting in a "missed call" message which can be displayed on the telephone. Such "missed call" message will include the telephone number of the calling party (derived from the CLI = calling line identifier, supplied to the user's telephone apparatus via the network). In that way the user can show the "missed call" number, which is equal to the calling telephone number of the admission server, which is a unique number which, moreover, cannot be falsified. It is noted that all visitors of the event, using this proposed ticketing method according to the invention, may receive a call originated from only one (and thus equal for all visitors) calling number. It may be preferred to suspend- from the server's side - the call, to save connection costs and time; however, if the call is still accepted by the user, that will not raise any problem, after all, such accepted call will be result as well in a displayed message, including the server's telephone number (CLI value) plus timestamp, which can be shown to the admission official.
- the admission server calls the user within a predetermined time window, which option is about equal to the previous one, however, the admission server does not wait for a call from each user/visitor, but takes the initiative itself by calling all (potential) visitors which have registered admission to the relevant event. The admission server e.g. can call all registered visitors one hour before the event starts, thus providing all visitors with the relevant server CLI plus a time stamp.

In both optional cases the data which can be shown to the admission official comprise the admission server's calling telephone number plus the timestamp, which items are sufficient for entrance control and which- due to the timestamp-cannot be re-used.

As was already noted, it may preferred that the admission server suspends the call to each relevant user before the user responds to the call; in that case the user will get the "missed call" information including the admission server's CLI and timestamp. When, however, the call is accepted by the called user, the server may output a voice message, drawing the user's attention to the coming event to which (s)he has been registered. In either case, when the call is accepted by the user or when the call is suspended by the server without being accepted by the user, the call can be displayed at the mobile telephone's display, either as a "previous (accepted) call" or as a "missed call", in both cases including the (server) CLI and the (call) timestamp, which thus is acceptable to prove the user's registered admission right (the "ticket") before the admission official.

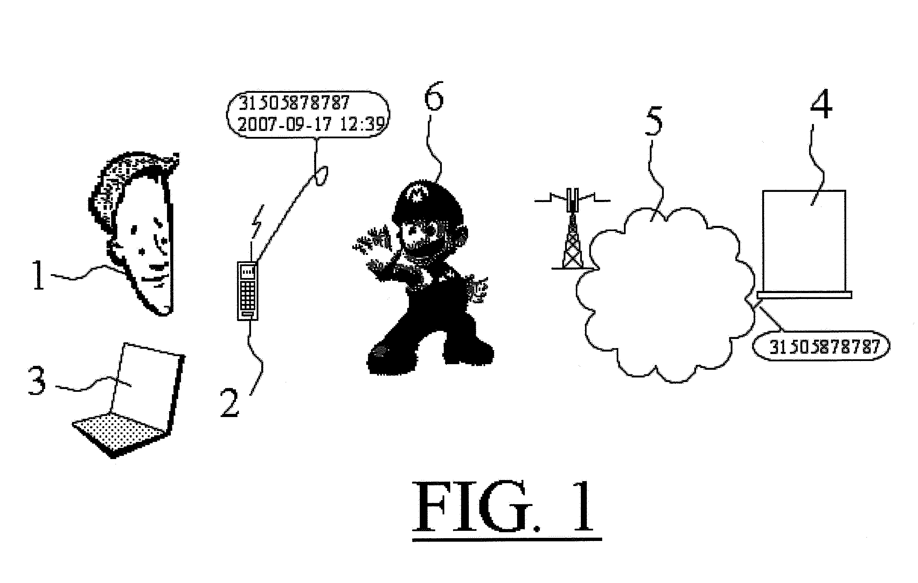

Figure 1 shows an exemplary embodiment of a system which is arranged to perform the method presented in the preceding.

Figure 1 shows a user 1, having a mobile telephone handset 2, comprising. The user 1 may use e.g. a PC 3 or other means (including conventional paper forms etc.) for a user requesting an admission right (e.g. license, ticket) for any location (e.g. concert hall, soccer field), including a registration of the telephone number (e.g. 31636172645) of his/her handset 2. In this way the user 1 may order a ticket for a concert, a soccer match etc.

An admission server 4 is provided which is arranged for registering the user's admission right, including the user's telephone number. The admission server 4 is connected to a telephone network 5 via an outgoing telephone number (or node), e.g. having the value 31505878787. This number is used to enable the user 1 to prove his/her admission right before an admission official 6, who is aware of the value (31505878787) of the telephone number of the server 4. The server 4 is arranged to call the user's handset 2 using the user's registered telephone number (31636172645), thus achieving that the telephone number (31505878787) of the admission server 4 will be- due to the CLI capability of the network 5 and the handset 2 - displayed on the user's handset 2, including the timestamp of the call from the server 4 to the handset 2. The user 1 shows the display of the handset 2, displaying the telephone number of the admission server 4 and the timestamp, to the official 6. The official 6 checks the displayed telephone number with the telephone number of the admission server 4 and the timestamp and will- if both telephone numbers match and the timestamp is appropriate- grant the user 1 admission to the relevant event.

As outlined above, each user 1 may, e.g. some time before the start of the relevant event, initiate a call to the server 4, after which the server 4 will check if the caller's telephone number has been registered (viz. in the ticket ordering stage), disconnect the user's call and set up a new call to the same user 1. In order to save telephone costs and processing time - after all, there may be many users (visitors) - the server 4 will call the user's handset 2 and suspend the call immediately after the connection has been established, before the user 1 normally could respond to the call. In that case, a "missed call" message will appear at the handset 2, e.g. in the form of "Missed call: 31505878787- 2007-09-17 12:39". If, however, the user 1 responded to the server's call before it was suspended, the handset may display something like: "Call: 31505878787- 2007-09-17 12:39". In either case, the user 1 can prove his/her registration (ticket) to the official 6 by showing the relevant telephone number and timestamp: 31505878787- 2007-09-17 12:39, which can be checked by the official 6.

Instead of arranging the admission server 4 to call back any registered user who calls the admission server, the admission server 4 can be arranged to call any registered user within a predetermined time window (e.g. some time before the event starts). In this option the server does not wait for incoming calls, but calls all users who have been registered (having ordered a ticket before). Also in this optional case, as well as in the preceding case, the admission server 4 may be arranged to suspend the call to each relevant registered user before the user responds, thus saving telephone costs and processing time (e.g. time window).

## Claims

1. Method for ticketing using a mobile telephone handset, comprising next steps:
- a user requests an admission right for any location and inputs the telephone number of his/her handset;
- the user's admission right is registered in an admission server, including the user's telephone number;
- in order to enable the user to prove his/her admission right before an admission official, the admission server, having an outgoing telephone number which is known by the admission official, calls the user's handset using the user's registered telephone number;
- the user shows the display of the handset, displaying the telephone number of the admission server, to the official;
- the official checks the telephone number with the outgoing telephone number of the admission server.

2. Method according to claim 1, wherein the user calls the admission server, after which the admission server calls back the user.

3. Method according to claim 1, wherein the admission server calls the user within a predetermined time window.

4. System for ticketing using a mobile telephone handset (2), comprising:
- means (3) for a user (1) to request an admission right for any location and inputting the telephone number of his/her handset;
- an admission server (4), arranged for registering the user's admission right, including the user's telephone number;
- the admission server, in order to enable the user to prove his/her admission right before an admission official (6), having an outgoing telephone number which is known by the admission official, and being arranged to call the user's handset using the user's registered telephone number, thus achieving that the telephone number of the admission server is displayed at the user's handset (2).

5. System according to claim 4, the admission server being arranged to call back any registered user who calls the admission server.

6. System according to claim 4, the admission server being arranged to call any registered user within a predetermined time window.

7. System according to any of claims 4 through 6, the admission server being arranged to suspend the call to the relevant registered user before the user responds.

8. Admission server (4), arranged for a system according to any of claims 4 through 7.

9. Software program means for performing a method according to any of claims 1 through 3.
